# EUROPEAN PATENT SPECIFICATION

(11) **EP 1 834 602 B1**
(45) Date of publication and mention of the grant of the patent: **05.10.2011**
(21) Application number: 07101423.7
(22) Date of filing: 30.01.2007
(51) Int. Cl.: A61C 3/06

(54) **Dental shank-attached grindstone and fabrication method for the same**
An einem Schaft befestigte Zahnschleifscheibe und Herstellungsverfahren dafür
Meule avec bras dentaire et procédé de fabrication correspondant

(30) Priority: 01.02.2006 JP 2006024109
(43) Date of publication of application: 19.09.2007
(73) Proprietor: MANI, INC., Utsunomiya Tochigi 321-3231 (JP)
(72) Inventor: Matsutani, Kanji, Utsunomiya Tochigi 321-3231 (JP); Hagiwara, Hiroyuki, Utsunomiya Tochigi 321-3231 (JP); Tetsuka, Satoshi, Utsunomiya Tochigi 321-3231 (JP); Takase, Toshiyuki, Utsunomiya Tochigi 321-3231 (JP); Akaba, Mieko, Utsunomiya Tochigi 321-3231 (JP)
(74) Representative: Peckmann, Ralf

(56) References cited:
- DE-C- 352 672
- DE-U1- 8 811 689

## Description

### BACKGROUND OF THE INVENTION

### FIELD OF THE INVENTION

The present invention relates to a fabrication method for a dental shank-attached grindstone which stone is used for polishing to remodel dental restorative materials such as inlays, crowns, or bridges made of a dental alloy, a dental porcelain, dental synthetic resin or other related materials and make an occlusal adjustment, and for other related purposes. Note that the word 'polishing' in this specification covers all generic processing with a grindstone and includes the so-called 'grinding', which is used to grind off a large amount at a time.

### DESCRIPTION OF THE RELATED ART

Conventionally, a dental shank-attached grindstone, which is made by attaching an end of a metallic shank to a grindstone, is used to remodel inlays, crowns, or bridges made of a dental alloy, a dental porcelain, dental synthetic resin or other related materials and make an occlusal adjustment, and for other related purposes. Materials such as silicon carbide, which is made by hardening abrasive grains using a binder, are used for the dental shank-attached grindstone.

DE-352 672 from 1922 discloses a handheld instrument with disks of steel for grinding a dental grindstone.

Dental shank-attached grindstones can come under either hard grindstones called carborundum points or slightly elastic grindstones called silicon points. Both of them use the same type of abrasive grains; however, the carborundum points use a ceramic mixture such as clay or feldspar as a binder. This binder and the abrasive grains are mixed uniformly, put into a mold, and then molded. Afterwards, the molded mixture is taken out from the mold and then sintered at a high temperature.

For the silicon points, rubber, a variety of resin, or a mixture thereof may be used as a binder. According to a manufacturing method for this shank-attached grindstone, a predetermined viscosity of abrasive grains and a half-melted binder are mixed first so that the abrasive grains can be distributed uniformly. Such a mixed, half-melted material is pressed into a mold, then heated and hardened, resulting in a molded grindstone.

Binding the grindstone and a shank may be carried out either by inserting an end of the shank into a mold, thereby forming a united body with the grindstone and then molding it, or forming a hole for the shank to go therein before molding the grindstone, molding the grindstone, inserting the shank into the hole, and then solidifying the molded grindstone with an adhesive. For the silicon points, the former method is mainly used while the latter is used for the carborundum points.

There are various types of carborundum points and silicon points, which can be selected for an object to be polished, such as an alloy, porcelain, or synthetic resin, and also according to polishing purpose such as rough, medium, or finish polishing by changing abrasive grains and grain size.

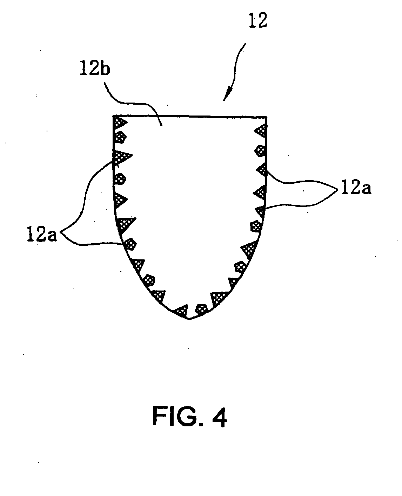

FIG. 4 shows and explains abrasive grains on the surface of a conventional dental shank-attached grindstone formed as described above. Since a grindstone 12 is formed by being compressed into a mold not shown in the drawing, the flat surfaces of abrasive grains 12a are moved along the mold surface and finally stabilized. Therefore, the surface after molding has become very smooth since the cutting blades or the corners of abrasive grains are buried in the binder, resulting in a grindstone surface composed of portions that are hardly capable of cutting any object. Note that the grindstone 12 includes the abrasive grains 12a spread uniformly, which is omitted in the drawing.

When inlays, crowns, and bridges are polished with the grindstone 12, they can by no means cut objects at first since the abrasive grains 12a do not protrude from the surface. However, as they continue to be used, the binder 12b and/ or the abrasive grains 12a come off, causing the cutting blades (corners) of the abrasive grains 12a to be exposed and thereby suddenly becoming able to cut objects. Accordingly, users must control polishing with extreme care. In addition, if the grindstone 12 is very smooth and used to polish, frictional heat occurs, and then use thereof within a patient's oral cavity may cause the patient pain. Moreover, even when it is used outside the oral cavity, frictional heat may burn an object to be polished, changing the color thereof, and resulting in loss of the product value of the object.

It is known that an emery paper is used to remove burrs from the shank-attached grindstone right after a shank is fixed thereto in such a manner as disclosed in paragraph 14 of Japanese Patent Application Laid-open No. Hei 9-117459. The dental shank-attached grindstone to which a shank is fixed has another problem of having some eccentricity. Since the dental shank-attached grindstone rotates at a high speed of 20,000 to 30,000 rpm, eccentricity brings about vibration, particularly preventing polishing of detailed parts thereof. Therefore, it is inconvenient.

However, polishing with the emery paper results in only removal of burrs, and it is difficult to improve the capability of polishing, let alone correction of eccentricity. In addition, the conventional dental shank-attached grindstone has little capability of polishing when it is new, and is thus inconvenient.

### SUMMARY OF THE INVENTION

The present invention is devised through consideration of the aforementioned problems. An objective thereof is to provide a dental shank-attached grindstone capable of maintaining almost constant sharpness from the time of initial use until the end of use.

In order to attain the objective described above, a dental shank-attached grindstone, according to the present invention, is fabricated by fixing a produced grindstone to a shank or is integrated on the shank, and is characterized in that the surface of said dental shank-attached grindstone is polished using an appropriate means under an appropriate condition and has almost the same sharpness for initial use as a steady sharpness provided by sufficiently polishing an object expected to be polished by design.

Furthermore, a dental shank-attached grindstone fabrication method is characterized by the steps defined in claim 1.

According to the present invention as summarized above, the entire outer surface of the dental shank-attached grindstone to which a shank is fixed is polished off with an appropriate means under an appropriate condition depending upon type of shank-attached grindstone, object to be polished, and purpose for polishing. This allows the cutting blades or the edges of abrasive grains distributed uniformly to protrude from the surface of the grindstone. Therefore, almost the same sharpness as steady sharpness, which is provided by sufficiently polishing an object to be polished with a new dental shank-attached grindstone, may be provided. Furthermore, even though subsequent use causes the binder and the abrasive grains to come off and thereby generating a new polishing surface, the new polishing surface generated is similar to the original polishing surface. Therefore, the grindstone provides excellent results such as having an excellent sharpness from the beginning and maintaining nearly a constant sharpness till the end of the available time period.

Furthermore, correction of eccentricity can be made at the same time as when polishing as described above, suppressing vibration during use, and allowing steady polishing.

### BRIEF DESCRIPTION OF THE DRAWINGS

Fig. 1 is a plane view illustrating a polishing apparatus according to the present invention;
FIG. 2 explains abrasive grains on the surface of a dental shank-attached grindstone according to the present invention;
FIG. 3 is a diagram showing the relationship between sharpness of the grindstone and polishing time for the grindstone; and
FIG. 4 explains abrasive grains on the surface of a conventional dental shank-attached grindstone.

### DESCRIPTION OF THE PREFERRED EMBODINMENTS

An embodiment according to the present invention is described below with reference to accompanying drawings.

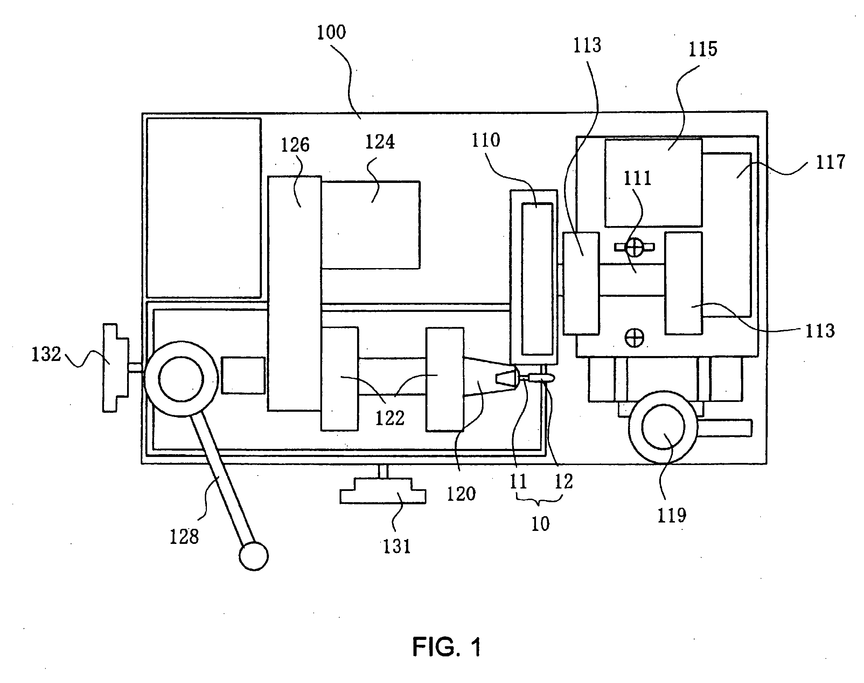

Fig. 1 is a plane view illustrating a polishing apparatus according to the present invention. The polishing apparatus 100 in the drawing includes a rotating grindstone 110 slightly to the right from the center. The rotating grindstone 110 is a form grindstone (i.e., grindstone that has the same grinding surface as the surface of a workpiece) having a polishing surface capable of completely fitting the form of a grindstone 12 of a dental shank-attached grindstone 10. The rotating grindstone 110 is fixed to an end of a rotating shaft 111, which is supported on either end by bearings 113. The rotating shaft 111 is connected to a motor 115 via a transmission 117 such as a belt, and the rotating grindstone 110 rotates with the rotating shaft 111 at the center. A feed handle 119 allows upward and downward movement of the motor 115 to the rotating grindstone 110 as a united body.

Beneath the bottom of the rotating grindstone 110, the dental shank-attached grindstone 10 is positioned and supported by a collet chuck 120. The collet chuck 120 is supported by bearings 122 and rotated by a transmission 126, which transmits the rotation of the motor 124.

When a chuck open/close lever 128 turns in a single direction, the collet chuck 120 then releases the dental shank-attached grindstone 10 held at the end thereof. When the chuck open/close lever 128 is freed at the released position, the chuck open/close lever 128 is turned reversely by an elastic body not shown in the drawing, resulting in closure of the collet chuck 120. This closure is defined as a workpiece holding state. By turning handles 131 and 132, the entire part from the collet chuck 120 including the dental shank-attached grindstone 10 as a workpiece to the motor 124 can be moved vertically and horizontally as shown in FIG. 1.

The dental shank-attached grindstone 10 consists of the grindstone 12 and the shank 11 to an end of which the grindstone 12 is fixed. A fabrication method for the shank-attached grindstone 10 is the same as the conventional example described above. As for the dental shank-attached grindstone 10, a model number is determined according to type of grindstone, object to be polished, type of polishing, such as rough, medium, or finish polishing, etc.

A polishing method for the dental shank-attached grindstone 10 is described forthwith. When the chuck open/close lever 128 is turned clockwise in the drawing, the collet chuck 120 then opens, allowing insertion of the shank 11 of the dental shank-attached grindstone 10. When the applied pressure on the chuck open/close lever 128 is removed, the chuck open/close lever 128 returns to a position illustrated in the drawing by an elastic means, firmly holding the shank 11 of the dental shank-attached grindstone 10.

The motors 115 and 124 rotate so as to rotate both of the grindstone 110 and the dental shank-attached grindstone 10. The handles 131 and 132 are turned so as for the grindstone 12 to approach near the rotating grindstone 110, finding a general position. Afterwards, the surface of the grindstone 12 is polished while fine adjustment is made using a feed handle 119.

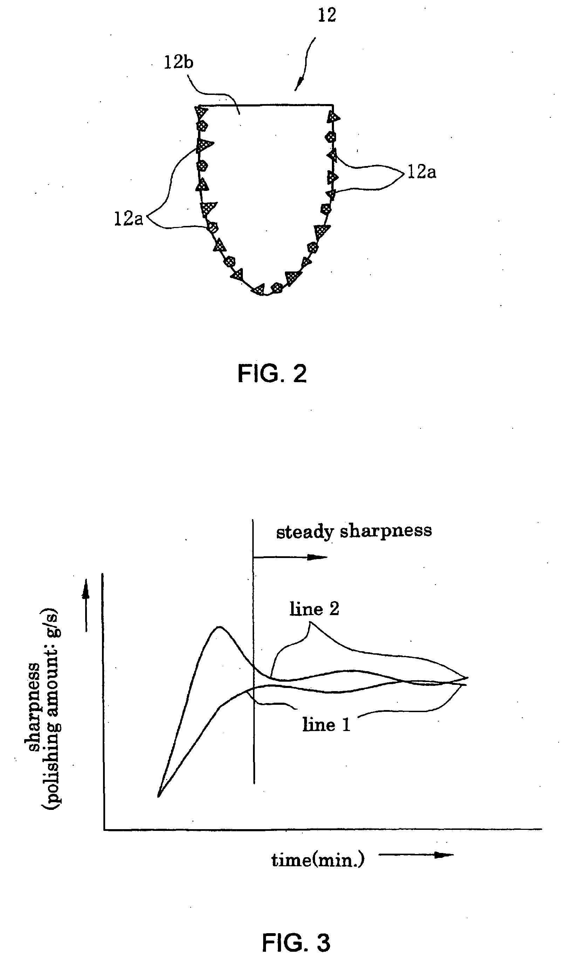

Polishing by the rotating grindstone 110 corrects the grindstone 12 in eccentricity, and further form-grinding changes the form of the grindstone 12 shown in FIG. 4 to that shown in FIG. 2. At this time, burrs of the grindstone 12 have naturally been removed.

Next, polishing the grindstone 12 according to the present invention is described. In order to mold the grindstone 12 of the dental shank-attached grindstone 10, the abrasive grains 12a and the binder 12b are mixed so that the abrasive grains 12a can be distributed uniformly. The mixture is pressed into a mold and molded. At this time, the outer most pieces of the abrasive grains 12a are stabilized with the flat surfaces thereof adhered to the inner wall of the mold. Therefore, the molded grindstone 12 comes to have a very smooth surface with the flat surfaces of the abrasive grains 12a exposed.

FIG. 3 is a diagram showing the relationship between sharpness of the grindstone 12 and polishing time for the grindstone 12. The vertical axis represents sharpness, which is evaluated according to the weight of polishing powder generated through polishing during a unit time. The horizontal axis represents time for polishing.

The grindstone 12 represented by line 1 is a conventional grindstone. The grindstone 12 has a very smooth surface just after molding, and thus has little sharpness. However, when polishing an object expected to be polished by design, the binder 12b starts coming off from the surface at first, and then the abrasive grains 12a begin to protrude. This improves the sharpness. However, since the abrasive grains 12a having protruded at the beginning had been on the surface of the grindstone 12, the flat surfaces thereof are exposed. Since the sharp edges of the abrasive grains 12a serve as cutting blades and are used to polish the object, much polishing can not be done with those flat surfaces.

When the grindstone 12 further polishes the object, the abrasive grains 12a on the surface also come off, forming a new polishing surface including the next layer of the abrasive grains 12a. The state of the surface of the grindstone 12 is illustrated in FIG. 2. The illustration shows that the abrasive grains 12a are oriented randomly and that quite a few edges of the abrasive grains 12a are oriented towards the outside. Therefore, sharpness improves through polishing of the originally existing abrasive grains 12a on the surface.

Afterwards, further continuation of polishing causes the binder 12b and the abrasive grains 12a to come off, resulting in generation of a new polishing surface. At this time, the newly protruded abrasive grains 12a are oriented randomly, the number of the edges thereof is nearly constant, and they are distributed on the surface of the grindstone 12 uniformly. Therefore, as shown with the line 1, almost the same sharpness can be always maintained.

The line 2 represents the case where polishing the object increased sharpness temporarily, and then the sharpness decreased afterwards to a steady state. This can be thought to happen in the following case as an example. The grindstone 12 right after molding has a very smooth surface as described above and is thus dull. Accordingly, as a higher grinding pressure is applied, the binder 12b comes off and the abrasive grains 12a fragment. Fragmentation of the abrasive grains 12a creates quite a few edges to function as cutting blades, thereby improving sharpness drastically. In other words, as the sharpness increases, the applied grinding pressure decreases, resulting in decrease in fragmentation of the abrasive grains 12a, thereby decreasing the number of edges, and consequently reaching a steady sharpness.

In either case of the line 1 or 2, or when there is a difference such as it taking a long or short time until reaching a steady sharpness, nonetheless, a steady sharpness is reached eventually. According to the present invention, the grindstone 12 continues to be polished with the rotating grindstone 110 until a steady sharpness as shown in FIGS 2 and 3 is reached.

A means and conditions for steady sharpness provided by polishing the grindstone 12 with the rotating grindstone 110, in other words, material and grain size of the abrasive grains in the rotating grindstone 110, binder, polishing speed, etc. depend on model number of grindstone 12 to be polished. However, the optimum conditions for every model number can be found by trial and error comprehensively.

Whether the grindstone 12 reaches a steady sharpness may be determined by actually using the grindstone 12 to obtain lines as shown in FIG. 3. Alternatively, there is also another method. For example, the dental shank-attached grindstone 10 turned to almost have a steady sharpness by continuing to be used for quite a long period of time may be regarded as having a steady sharpness. Alternatively, there is another method according to which sharpness is measured when the grindstone 12 is used to polish an object expected to be polished by design, and which the grindstone 12 is then polished with the rotating grindstone 110 so that the same sharpness as the measured sharpness can be obtained.

The process for measuring the steady sharpness and determining a means and conditions for improving the initial sharpness of the grindstone 12 into almost the same sharpness as the steady sharpness is performed for every model number comprehensively.

Once the grindstone 12 as a workpiece reaches a steady sharpness, polishing is carried out with the rotating grindstone 110 using the same conditions as the polishing conditions for the steady sharpness reached. This makes it possible to polish each subsequent grindstone 12 repeatedly, allowing mass production.

Furthermore, by making a table of the rotating grindstone 110 to be used for each of various types of the grindstone 12 and corresponding polishing conditions in advance, polishing conditions can be easily determined to polish any type of the grindstone 12 as a workpiece.

The conventional dental shank-attached grindstone 10 is polished to remove burrs. In general, however, polishing amount for removal of burrs each time is extremely small. Moreover, polishing with the emery paper can not correct eccentricity. By comparison, polishing amount according to the present invention is enough that the abrasive grains 12a protrude from the surface of the grindstone 12. Moreover, since the grindstone 12 is polished with the rotating grindstone 110, eccentricity is corrected at the same time.

Since the dental shank-attached grindstone 10 provided in such a manner has a uniform distribution of cutting blades or corners of the abrasive grains 12a protruded from the surface to an extent that they are suitable to each object to be polished, it is capable of polishing excellently from the time of initial use.

The apparatus of the embodiment shown in FIG. 1 uses an electrodeposition form grindstone made of diamond abrasive grains as the rotating grindstone 110. However, it is not limited to use of the electrodeposition grindstone. A metal bond grindstone, a CBN grindstone, and a stick-shaped grindstone may be used alternatively. Furthermore, use of the form grindstone as the rotating grindstone 110 allows polishing of the entire outer surface of the grindstone 12 at once. However, a type that uses the side only, such as a shank-attached, cylinder shaped grindstone, does not need to be a form grindstone. For provision of sharpness merely by making the abrasive grains 12a protrude from the surface of the grindstone 12, grindstones other than the rotational grindstone 110 may be used.

Note that the rotational directions of the rotating grindstone 110 and the grindstone 12 are desirably the same. This is because they move inversely to each other at the contact region, thereby providing a fast polishing speed with a low rotational frequency. However, this is not limited to the same direction, either.

While the invention has been described with reference to particular example embodiments, further modifications and improvements which will occur to those skilled in the art, may be made within the purview of the appended claims, without departing from the scope of the invention in the claims.

## Claims

1. A fabrication method for a dental shank-attached grindstone (10) having a shank (11) and a grindstone (12), the grind stone (12) including a mix of grains (12a) and a binder (12b), the method comprising the steps of:
determining a model number according to the type of grindstone, the object to be polished and the polishing type, such as a rough, medium, or final polishing;
polishing the dental shank-attached grind stone (12) (10) by means of a further grind stone (110), wherein the grindstone (12) and the further grind stone (110) are both rotated;
measuring a sharpness of the shank attached grind stone (12) provided by the polishing by means of measuring the weight of polishing powder generated per unit time; and
measuring the period of time required for the sharpness to become steady.

2. The method according to claim 1, wherein the dental shank-attached grindstone is polished to correct eccentricity.

## Patentansprüche

1. Herstellungsverfahren für eine an einem Schaft befestigte Zahnschleifscheibe (10), die einen Schaft (11) und eine Schleifscheibe (12) aufweist, wobei die Schleifscheibe (12) ein Gemisch aus Schleifkörnern (12a) und einem Bindemittel (12b) enthält, wobei das Verfahren folgende Schritte umfasst:
- Bestimmen einer Modellnummer entsprechend der Art der Schleifscheibe, dem zu polierenden Objekt und der Polierart, wie zum Beispiel rau, mittel oder Endpolitur;
- Polieren der an einem Schaft befestigten Zahnschleifscheibe (10) mittels einer weiteren Schleifscheibe(110), wobei die Schleifscheibe(12) und die weitere Schleifscheibe(110) beide gedreht werden;
- Messen einer Schärfe der durch den Poliervorgang hergestellten an einem Schaft befestigten Schleifscheibe(10) durch Messen des Gewichts des pro Zeiteinheit erzeugten Polierpulvers; und
- Messen des Zeitraums, der erforderlich ist, bis sich die Schärfe stabilisiert hat.

2. Verfahren nach Anspruch 1, wobei die an einem Schaft befestigte Zahnschleifscheibe auf die richtige Außermittigkeit poliert wird.

## Revendications

1. Procédé de fabrication d'une meule avec bras dentaire (10) doté d'un bras (11) et d'une meule (12), la meule (12) comprenant un mélange de grains (12a) et un liant (12b), le procédé comportant les étapes suivantes :
- détermination d'un numéro de modèle selon le type de meule, l'objet à polir et le type de polissage, tel qu'un polissage grossier, moyen ou de finition ;
- polissage de la meule avec bras dentaire (10) au moyen d'une meule supplémentaire (110), dans lequel la meule (12) et la meule supplémentaire (110) sont tous les deux en rotation ;
- mesure d'un affûtage de la meule avec bras (12) fournie par le polissage en mesurant le poids de la poudre de polissage générée par unité de temps ; et
- mesure de la période de temps requise pour que l'affûtage devienne uniforme.

2. Procédé selon la revendication 1, dans lequel la meule avec bras dentaire est polie pour corriger l'excentricité.
